# EUROPÄISCHE PATENTSCHRIFT

(11) **EP 0 885 768 B1**
(45) Veröffentlichungstag und Bekanntmachung des Hinweises auf die Patenterteilung: **07.09.2005**
(21) Anmeldenummer: 98110248.6
(22) Anmeldetag: 05.06.1998
(51) Int. Cl.: B60N 2/44

(54) **Schonbezug**
Protective cover
Housse de protection

(30) Priorität: 16.06.1997 AT 103297
(43) Veröffentlichungstag der Anmeldung: 23.12.1998
(73) Patentinhaber: Walser, Hans-Karl, 6845 Hohenems (AT)
(72) Erfinder: Walser, Hans-Karl, 6845 Hohenems (AT)
(74) Vertreter: Hefel, Herbert

(56) Entgegenhaltungen:
- EP-A- 0 494 583
- WO-A-91/13576
- US-A- 1 860 520
- US-A- 2 174 073
- US-A- 4 723 814

## Beschreibung

Die Erfindung bezieht sich auf einen Schonbezug für die gegebenenfalls geteilte Rückenlehne einer rückseitigen, die Rückenlehne und einen Sitzteil aufweisenden Sitzbank bei Kraftfahrzeugen, wobei der untere Rand dieses Schonbezuges im Eckbereich zwischen Rückenlehne und Sitzteil festlegbar ist und der obere Rand des Schonbezuges im Einsatz den oberen Teil der Rückenlehne ganz oder zumindest zum Teil übergreift, wobei der obere Rand des Schonbezuges biegesteif gestaltet ist und zur Bildung des biegesteifen Randes dieser obere Rand des Schonbezuges umgebördelt ist und in diesen durch die Umbördelung gebildeten tunnelartigen Bund eine Schiene oder ein Stab eingelegt ist und an diesem biegesteifen Rand mindestens ein Klemmhalter scharnierartig schwenkbar gelagert ist und gegebenenfalls die Schiene oder der Stab längsgeteilt ist.

Aus der DE 1 529 476 A ist ein abnehmbarer Bezug für Kraftfahrzeugsitze, Polstermöbel oder dergleichen bekannt. Dieser besteht aus einem elastischen Gewebe aus natürlichen oder künstlichen Faserstoffen. Er weist eine Auflage für den Sitz und eine Auflage für das Rückenpolster auf. Der Rückenteil ist an seiner oberen Querkante mit einer Verstärkung versehen, welche zwischen der Rückenlehne und einer Rückwand einklemmbar ist. Diese Verstärkung kann unter anderem aus einem rohrförmigen Element bestehen. Als rohrförmige Elemente werden Rohre aus Kunststoff, aus Metall oder aus einem weichen Kunststoffmaterial vorgesehen. Die Anwendung dieses Bezuges setzt voraus, daß Rückwand und Bezug und die Anordnung der erwähnten Verstärkung genau aufeinander abgestimmt sind, widrigenfalls der Bezug entweder unnötig gespannt werden muß oder aber daß er sich in Falten legt. Für eine universelle Anwendbarkeit für Kraftfahrzeuge unterschiedlicher Modelle ist dieser Vorschlag nicht geeignet.

Die US-PS 2 174 073 A zeigt und beschreibt einen Überzug, der unter anderem auch für Kraftfahrzeugsitze vorgesehen ist und der mit einer Befestigungseinrichtung ausgestattet ist. Diese besteht aus einem länglichen Metallstreifen. Das eine Ende dieses Metallstreifens ist abgerundet, um das Einstecken und Eintreiben dieses Metallstreifens in einen Spalt oder eine Nut der Polsterung zu erleichtern. Das andere Ende besitzt eine Mehrzahl von schlitzartigen Öffnungen, die mit einem metallischen, plattenförmigen und aufgebogene Laschen aufweisenden Gegenstück unter Zwischenlegung des Bezugstoffes nach Art einer Blechverbindung verbindbar ist. Die erwähnten aufgebogenen Laschen werden durch den Bezugstoff hindurch und durch die schlitzartigen Öffnungen des länglichen Meanstreifens hindurchgesteckt und anschließend umgebogen. Darüberhinaus sind an diesem metallischen, länglichen Streifen mehrere ausgestanzte und aufgebogene Laschen in einer Reihe vorgesehen, die als Widerhaken dienen. Für einen Schonbezug für Kraftfahrzeugsitze ist diese bekannte Konstruktion nicht geeignet. Abgesehen davon, daß die mit dem Rand des Bezugstoffes sozusagen punktförmig verbundenen, laschenförmigen Befestigungseinrichtungen keinen einwandfreien Sitz des Bezugstoffes garantieren können - durch die Belastung des Sitzes beim bestimmungsgemäßen Gebrauch desselben wird die Stoffkante des Bezuges zwischen den laschenförmigen Haltern wellenartig verformt - beanspruchen die großflächigen Verbindungsbereiche relativ viel Bezugstoff, und auch für eine weniger geschickte Person dürfte es nur schwer möglich sein, diese Laschen in der hier ersichtlichen Art am Stoffrand festzulegen. Darüberhinaus ist die hier vorgesehene Verbindung und Befestigung sozusagen auf Dauer ausgelegt.

Weiters ist in diesem Zusammenhang noch die DE 936 185 C zu erwähnen. Diese zeigt und beschreibt eine Anordnung zur Befestigung von Schonbezügen auf Polstern wie Sitzpolstern und Seitenverkleidungen, insbesondere in Kraftfahrzeugen, die zum Teil aus einer durch Besatzstreifen oder dergleichen und haken- oder klammerartigen, im Abstand voneinander angeordneten und an der Sitzpolsterung oder Seitenverkleidung befestigten Halterungen gehaltenen Leiste besteht. Die Leiste besteht aus einem wenigstens in einer Richtung verformbaren, elastischen, stabförmigen Element und ist durch die Halterungen untergriffen. Die hier vorgesehenen Halterungen aus bandartigem Material sind mehrfach umgebogen, und es ist nicht erkennbar, in welcher Weise diese Halterungen an einem Kraftfahrzeugsitz festgelegt werden könnten - abgesehen davon, daß die Leiste durch die Halterung von unten her untergriffen ist, so daß die Anwendung dieser Erfindung offenbar voraussetzt, daß oberhalb der Lehne eines Kraftfahrzeugsitzes eine Einrichtung befestigt werden müßte, an welcher diese Halter ihrerseits festlegbar sind. Abgesehen davon, dürften solche Halterungen aus rein sicherheitstechnischen Gründen nicht verwendet werden.

Ein Schonbezug der eingangs genannten Art ist aus der US-A-1,860,520 bekannt. Mit dem oberen Rand des Schonbezugs sind Hakenelemente verbunden, welche in den Bereich zwischen der Rückseite der Sitzlehne und der Rückwand des Fahrzeugs eingeschoben werden.

Ausgehend von diesem Stand der Technik zielt die Erfindung darauf ab, eine Halterung für den Schonbezug zu schaffen, die sozusagen universell einsetzbar und anwendbar ist, also für Fahrzeugsitze unterschiedlicher Bauart und Typen eingesetzt und verwendet werden kann, und den Schonbezug so zu gestalten, daß er vor allem einfach zu montieren ist und die Montage kein besonderes handwerkliches Geschick erfordert. Die Erfindung löst diese Aufgabe durch die Merkmale im kennzeichnenden Teil des Patentanspruchs 1. Der überwiegende Teil der modernen Personenkraftfahrzeuge ist so gestaltet, daß an die Rückenlehne der hinteren Sitzbank eine Hutablage und/oder eine Gepäcksraumabdeckung anschließt, deren Niveau etwas unterhalb der Oberkante der Rückenlehne liegt. Dabei ist - konstruktiv bedingt - ein Spalt zwischen der Rückenlehne und der Hutablage bzw. der Gepäcksraumabdeckung vorhanden. Dieser Spalt wird in sinnvoller Weise gemäß der Erfindung für die Festlegung des Schonbezuges verwendet. Wenn hier und im folgenden vom biegesteifen oberen Rand des Schonbezuges die Rede ist, an dem der oder die Klemmhalter angeordnet sind, so ist dies in der Weise zu verstehen, daß dieser Rand nicht flexibel ist, wie der Rand einer Stoffbahn, sondern eine gewisse Eigensteifigkeit aufweist, wie etwa ein dünner Holzstab oder ein Metallstab oder ein glasfaserverstärkter Kunststoffstab.

Um die Erfindung zu veranschaulichen, wird sie beispielhaft anhand der Zeichnung näher erläutert. Es zeigen:
- Fig. 1: eine schematische Seitensicht der rückseitigen Sitzbank eines Personenkraftwagens mit anschließender Hutablage;
- Fig. 2: einen Schnitt durch den oberen biegesteifen Rand des Schonbezuges;
- die Fig. 3 und 4: Seitensicht und Ansicht eines Klemmhalters;
- Fig. 5: einen Schnitt durch den oberen biegesteifen Rand des Schonbezuges mit eingehängtem Klemmhalter nach den Fig. 3 und 4;
- die Fig. 6 und 7: eine andere Ausgestaltung eines Klemmhalters in Ansicht und Seitensicht;
- Fig. 8: die Rückansicht eines in die Ebene ausgebreiteten Schonbezuges für die Rückenlehne.

Die einzelnen Figuren weisen unterschiedliche Maßstäbe auf.

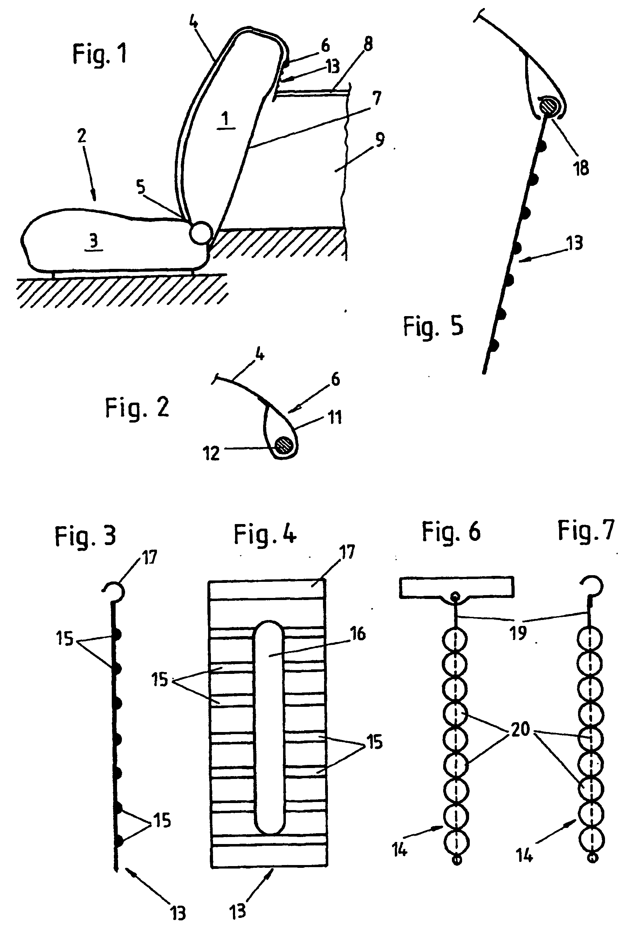

Auf die Rückenlehne 1 einer hinteren Sitzbank 2 mit einem Sitzteil 3 ist ein Schonbezug 4 aufgelegt, dessen oberer Rand 6 und dessen unterer Rand 5 an dieser Sitzbank festgelegt sind. An die Rückseite 7 der Rückenlehne 1 schließt eine Hutablage an, die einen Gepäcksraum 9 nach oben abschließt. Zwischen der Rückenlehne 1 und der Hutablage 8 ist ein Spalt vorhanden. Die Rückenlehne 1 kann über ihre Länge (rechtwinkelig zur Zeichenebene in Fig. 1) einstückkig ausgebildet sein oder aber wie bei modernen Personenkraftfahrzeugen zweigeteilt, wobei der eine oder andere Teil dieser Rückenlehne 1 zur Vergrößerung des Gepäcksraumes 9 nach vorne hin (in Fig. 1 nach links) gekippt werden kann. Dies ist hinreichend bekannt.

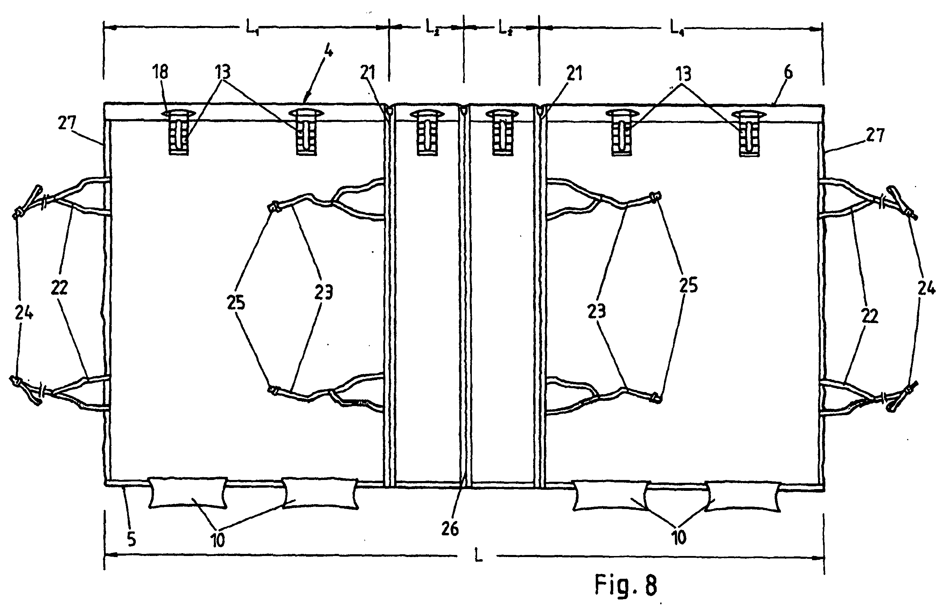

Zur Festlegung des unteren Randes 5 des Schonbezuges 4 sind beim gezeigten Ausführungsbeispiel wulstartige Kissen 10 an diesem Rand 5 angenäht (Fig. 8), die bei der Montage des Schonbezuges 4 in die Fuge zwischen der Rückenlehne 1 und dem Sitzteil 3 eingeschoben werden.

Der obere Rand 6 des Schonbezuges 4 ist zur Bildung eines tunnelartigen Bundes 11 umgebördelt (Fig. 2) und in diesem tunnelartigen Bund 11 ist ein biegesteifer Stab 12, beispielsweise aus Holz, Metall, glasfaserverstärktem Kunststoff o.dgl. eingefügt. Dieser biegesteife Stab 12 kann einstückig sich über die Länge L des Schonbezuges 4 erstrecken, wenn die Rückenlehne der Sitzbank nicht unterteilt ist, oder aber in Längsrichtung unterteilt sein, also mehrteilig ausgebildet sein. Die Längen der einzelnen Abschnitte dieses Stabes 12 entsprechen dann den Längen L1 und L2 der einzelnen Abschnitte des Schonbezuges, die durch Reißverschlüsse 21, 26, Klettverschlüsse oder andere Verschlüsse miteinander verbunden sind. Damit an diesen biegesteifen Stab 12 der Klemmhalter 13 oder 14 angelenkt werden kann, weist dieser tunnelartige Bund 11 über seine Länge mehrere schlitzförmige Öffnungen 18 auf, die sich in Längsrichtung des Stabes 12 erstrecken.

Ein Klemmhalter 13 in einer ersten Ausführungsform ist in den Fig. 3 und 4 dargestellt. Er ist platten- oder streifenförmig ausgestaltet, wobei zumindest auf einer Seite mehrere über seine Länge verteilte horizontale rippenartige Stege 15 angeformt sind. Des weiteren besitzt dieser Klemmhalter 13 eine mittige Langlochausnehmung 16 und sein oberer Rand ist als offene Rinne 17 ausgebildet mit einem zum Durchmesser des Stabes 12 korrespondierenden Durchmesser. Bei der Montage des Schonbezuges 4 wird diese offene Rinne 17 durch die schlitzförmige Öffnung 18 eingeführt und am Stab 12 angeklinkt und dadurch an diesem Stab 12 scharnierartig festgelegt. Dieser Klemmhalter 13 ist zweckmäßigerweise aus Kunststoff gefertigt und besitzt eine gewisse Eigensteifigkeit, abhängig von seiner Stärke und des zu seiner Herstellung verwendeten Kunststoffes.

Ein solcher Klemmhalter kann aber auch schnurartig flexibel sein, und ein derartiger Klemmhalter 14 ist in den Fig. 6 und 7 gezeigt. Er besitzt ebenfalls eine obere offene Rinne 17 zur Festlegung am Stab 12 und an dieser offenen Rinne 17 ist eine Schnur 19 festgelegt, an der hier mehrere Verdickungen als Kugeln 20 aufgefädelt sind.

Einen Schonbezug 4, in die Ebene ausgebreitet und von hinten gesehen und für eine mehrteilige Sitzbank gestaltet, zeigt Fig. 8. Am oberen biegesteifen Rand 6 sind mehrere Klemmhalter 13 nach den Fig. 3 und 4 angeordnet, und zwar in der Weise wie in Fig. 5 im Detail gezeigt. Im Mittelbereich des Schonbezuges 4 sind drei vom oberen zum unteren Rand verlaufende Reißverschlüsse 21 und 26 vorgesehen. Anstelle von Reißverschlüssen herkömmlicher Bauart können auch Klettverschlüsse oder vergleichbare Verschlüsse verwendet werden. An den Rändern der einzelnen Abschnitte des Schonbezuges sind Bänder 22 und 23 befestigt, wobei an den Enden dieser Bänder Verschlußglieder 24 und 25 vorgesehen sind. Auch für die Mittelstreifen des Schonbezuges, die von den Reißverschlüssen 21 und 26 begrenzt sind, können solche Bänder 22 und 23 mit Verschlüssen 24 und 25 angeordnet sein, doch sind diese in Fig. 8 aus Gründen der Übersichtlichkeit nicht dargestellt. Die Bänder 22 und 23 sind jeweils gabelartig gespreizt, und zwar an dem Ende, mit dem sie am seitlichen Rand 27 bzw. an den dazu korrespondierenden Rändern des Schonbezuges befestigt sind.

Die Montage des Schonbezuges 4 ergibt sich im wesentlichen aus seinem vorstehend geschilderten Aufbau: Die wulstartigen Kissen 10 am unteren Rand 5 werden vorerst in die Fuge zwischen Sitzteil 3 und Rückenlehne 1 eingeschoben, was ohne Zuhilfenahme von Werkzeugen möglich ist. Dann wird der obere Rand 6 des Schonbezuges 4 über den oberen Teil der Rückenlehne 1 gelegt und die am biegesteifen Rand angelenkten Klemmhalter 13, die eine hinreichende Biegesteifigkeit besitzen, werden in den zwischen der Rückseite 7 der Rückenlehne 1 und der Hutablage 8 befindlichen Spalt eingeschoben, und zwar soweit, bis der Schonbezug 4 hinreichend gespannt ist. Die Länge des Klemmhalters 13 und seine rippenartigen Stege 15 bieten hier einen hinreichend großen Anpassungsspielraum. Die an den Seitenrändern 27 des Schonbezuges 4 vorgesehenen Bänder 22 bzw. 23, die gummielastisch ausgebildet sind, können mit ihren Enden miteinander über die Verschlußglieder 24 und 25 verbunden werden. Die im oberen Bereich des Schonbezuges 4 vorgesehenen elastischen Bänder 22 und 23 werden dabei zweckmäßigerweise durch die Langlochausnehmung 16 der Klemmhalter 13 hindurchgezogen.

Besitzt der Klemmhalter 13 nach den Fig. 3 und 4 eine hinreichend große Eigensteifigkeit, so daß er in den erwähnten Spalt zwischen Rückseite 7 und Hutablage 8 eingeschoben werden kann, auch wenn diese Einschiebebewegung evtl. wegen der Enge des Spaltes nur gegen einen Widerstand möglich ist, so ist der Klemmhalter 14 nach den Fig. 6 und 7 schnurartig flexibel. Seine Montage setzt voraus, daß der erwähnte Spalt verbreitert werden kann, sei es durch Vorklappen der Rückenlehne 1 oder durch Verschiebung oder Wegnahme der Hutablage 8. Die Verdickungen, hier als Kugeln 20 ausgebildet, können auf der Schnur 19 frei aufgefädelt sein.

Klemmhalter für den hier vorgesehenen Zweck können auch anders ausgebildet sein. Beispielsweise kann der Klemmhalter bandförmig gestaltet sein, wobei in dieses Band rippenartige Stege eingearbeitet sind. Ist der Klemmhalter, welche Form auch immer er aufweist, hinreichend eigensteif, so kann er in den Spalt zwischen Rückenseite 7 und Hutablage 8 von oben her eingeschoben werden. Handelt es sich um einen Klemmhalter, der keine hinreichende Eigensteifigkeit aufweist, wie dies bei Schnüren oder Bändern der Fall ist, so muß zur Montage der letzterwähnte Spalt verbreitet werden können, um den Klemmhalter einzuführen.

Der vorstehend beschriebene und anhand der Zeichnung dargestellte Schonbezug 4 kann auch dann an einer Rückenlehne einer Kraftfahrzeugbank montiert und festgelegt werden, wenn keine Hutablage und keine Gepäcksraumabdeckung vorgesehen sind, die hier einen Spalt mit der Rückseite 7 dieser Rükkenlehne begrenzen. In diesem Fall werden die oberen elastischen Bänder 22 und 23 durch die Langlochausnehmung 16 des Klemmhalters 13 geführt und über ihre Verschlußglieder 24 und 25 miteinander verbunden. Der in allen Fällen vorhandene biegesteife obere Rand 6 dient dazu, daß über die punktuell angeordneten Klemmhalter die Zugspannung auf den Schonbezug 4 gleichmäßig aufgebracht wird.

### Legende zu den Hinweisziffern:

- 1: Rückenlehne
- 2: Sitzbank
- 3: Sitzteil
- 4: Schonbezug
- 5: unterer Rand
- 6: oberer Rand
- 7: Rückseite
- 8: Hutablage
- 9: Gepäcksraum
- 10: wulstartiges Kissen
- 11: tunnelartiger Bund
- 12: Stab
- 13: Klemmhalter
- 14: Klemmhalter
- 15: rippenartiger Steg
- 16: Langlochausnehmung
- 17: offene Rinne
- 18: schlitzförmige Öffnung
- 19: Schnur
- 20: Kugel
- 21: Reißverschluß
- 22: Band
- 23: Band
- 24: Verschlußglied
- 25: Verschlußglied
- 26: Reißverschluß
- 27: seitlicher Rand

## Patentansprüche

1. Schonbezug für die gegebenenfalls geteilte Rückenlehne (1) einer rückseitigen, die Rückenlehne (1) und einen Sitzteil (3) aufweisenden Sitzbank (2) bei Kraftfahrzeugen, wobei der untere Rand (5) dieses Schonbezuges (4) im Eckbereich zwischen Rückenlehne (1) und Sitzteil (3) festlegbar ist und der obere Rand (6) des Schonbezuges (4) im Einsatz den oberen Teil der Rückenlehne (1) ganz oder zumindest zum Teil übergreift, wobei der obere Rand (6) des Schonbezuges (4) biegesteif gestaltet ist und zur Bildung des biegesteifen Randes (6) dieser obere Rand des Schonbezuges (4) umgebördelt ist und in diesen durch die Umbördelung gebildeten tunnelartigen Bund eine Schiene oder ein Stab (12) eingelegt ist und an diesem biegesteifen Rand (6) mindestens ein Klemmhalter (13, 14) scharnierartig schwenkbar gelagert ist, **dadurch gekennzeichnet, daß** der bei aufgelegtem Schonbezug (4) zwischen Rückenlehne (1) und einer Hutablage (8) oder einer Gepäcksraumabdeckung form- und/oder klemmschlüssig gehaltene Klemmhalter (13, 14) platten- und/oder streifenförmig ausgebildet ist und zumindest an seiner der Rückenlehne (1) abgewandten Seite horizontal angeordnete rippenartige Stege (15) aufweist oder flexibel und schnurartig ausgebildet ist und entlang dieses schnurartigen Klemmhalters (14) Verdickungen, beispielsweise Kugeln (20), Walzen, Würfel o.dgl. aufgereiht sind.

2. Schonbezug nach Anspruch1, **dadurch gekennzeichnet, daß** der umgebördelte Rand (6) in seiner Längsrichtung verlaufende schlitzartige Öffnungen (18) aufweist und durch diese Öffnungen (18) der Klemmhalter (13, 14) mit der Schiene oder dem Stab (12) verbunden ist.

3. Schonbezug nach Anspruch 1, **dadurch gekennzeichnet, daß** der platten- und/oder streifenförmige Klemmhalter (13) Ösen oder Durchbrechungen (16) aufweist zur Durchführung der am Schonbezug (4) angeordneten Bänder (22, 23).

4. Schonbezug nach Anspruch 1, **dadurch gekennzeichnet, daß** er aus mehreren Teilen besteht, die durch vom oberen zum unteren Rand (5, 6) verlaufende Reißverschlüsse (21, 26) o.dgl. miteinander verbunden sind und diese Reißverschlüsse im Längsmittelbereich des Schonbezuges (4) vorgesehen sind.

5. Schonbezug nach einem der Ansprüche 1 bis 4, **dadurch gekennzeichnet, daß** die Längen der einzelnen Abschnitte des längsgeteilten Stabes (12) den jeweiligen Längen der den Schonbezug bildenden, durch Reißverschlüsse (21, 26) getrennten Abschnitte entsprechen.

6. Schonbezug nach Anspruch 1, **dadurch gekennzeichnet, daß** an dem mindestens einen Klemmhalter (13, 14) Bänder (22, 23) festlegbar sind, von welchen mindestens einige endseitig mit den seitlichen Ränder (27) des Schonbezuges (4) verbunden sind.

7. Schonbezug nach einem der Ansprüche 1 bis 6, **dadurch gekennzeichnet, daß** die Schiene oder der Stab (12) längsgeteilt ist.

## Claims

1. A protective cover for the, optionally divided, seat back (1) of a motor-vehicle rear bench seat (2) comprising the seat back (1) and a sitting part (2), wherein the lower edge (5) of this protective cover (4) can be made fast in the corner region between the seat back (1) and the sitting part (3) and, when the protective cover (4) is in use, the upper edge (6) of the protective cover (4) totally, or at least partially, overlaps the upper part of the seat back (1), wherein the upper edge (6) of the protective cover (4) is resistant to bending and, in order to form the bending-resistant edge (6), this upper edge of the protective cover (4) is flanged and in this tunnel-like band formed by the flanging there is inserted a bar or a rod (12) and at least one clamping holder (13, 14) is pivotally mounted on this bending-resistant edge (6) in a hinge-like manner, **characterised in that** the clamping holder (13, 14), which is held in a positive-locking and/or clamp-locking manner between the seat back (1) and a rear parcel shelf (8) or a removable interior boot lid when the protective cover (4) is put on, is plate-shaped and/or lamellar and, at least at its side facing away from the seat back (1), has horizontally arranged rib-like crosspieces (15) or is flexible and cord-like and swellings, for example balls (20), rollers, cubes or the like, are threaded along this cord-like clamping holder (14).

2. A protective cover according to claim 1, **characterised in that** the flanged edge (6) has slot-like openings (18) extending in its longitudinal direction and the clamping holder (13, 14) is connected to the bar or the rod (12) through these openings (18).

3. A protective cover according to claim 1, **characterised in that** the plate-shaped and/or lamellar clamping holder (13) has eyes or through openings (16) for passage of the straps (22, 23) arranged on the protective cover (4).

4. A protective cover according to claim 1, **characterised in that** it is composed of a plurality of parts connected to one another by zip fasteners (21, 26) or the like running from the upper to the lower edge (5, 6) and these zip fasteners are provided in the longitudinally central region of the protective cover (4).

5. A protective cover according to any one of claims 1 to 4, **characterised in that** the lengths of the individual portions of the longitudinally divided rod (12) correspond to the respective lengths of the portions which form the protective cover and which are separated by zip fasteners (21, 26).

6. A protective cover according to claim 1, **characterised in that** straps (22, 23) are securable to the at least one clamping holder (13, 14), at least a few of which straps are connected at the end to the lateral edges (27) of the protective cover (4).

7. A protective cover according to any one of claims 1 to 6, **characterised in that** the bar or the rod (12) is longitudinally divided.

## Revendications

1. Housse de protection pour le dossier (1) le cas échéant divisé d'une banquette arrière (2) d'un véhicule automobile, comportant un dossier (1) et une assise (3) selon laquelle,
le bord inférieur (5) de la housse (4) se fixe dans la zone de coin entre le dossier (1) et l'assise (3) et son bord supérieur (6) mis en place couvre totalement ou partiellement la partie supérieure du dossier (1),
le bord supérieur (6) étant rigide en flexion, ce bord supérieur (6) est rabattu pour former le bord rigide en flexion (6) et la collerette en forme de tunnel ainsi réalisée reçoit un rail ou une tige (12), ce bord rigide en flexion (6) portant de manière articulée comme une charnière, au moins un support de pincement (13, 14),
**caractérisée en ce que**
lorsque la housse (4) est placée entre le dossier (1) et la plage arrière (8) ou le dessus du coffre à bagages on a réalisé des supports de pincement (13, 14) en forme de plaques et/ou de bandes, tenus par la forme et/ou par pincement et au moins sur son côté non tourné vers le dossier (1), la housse comporte des entretoises en forme de nervures (15), horizontales, ou souples, en forme de cordon et des renforcements par exemple des billes (20), des rouleaux, des tubes ou analogues étant prévus le long de ce support de pincement (14) en forme de cordon.

2. Housse de protection selon la revendication 1,
**caractérisée en ce que**
le bord supérieur rabattu (6) comporte des ouvertures (18) en forme de fentes dirigées dans sa direction longitudinale et le support de pincement (13, 14) est maintenu par ces ouvertures (18) avec le rail ou la tige (12).

3. Housse de protection selon la revendication 1,
**caractérisée en ce que**
le support de pincement (13) en forme de plaques et/ou de bandes comporte des oeillets ou des orifices (16) pour le passage de rubans (22, 23) prévus sur la housse (4).

4. Housse de protection selon la revendication 1,
**caractérisée en ce qu'**
elle se compose de plusieurs parties reliées les unes aux autres par des liaisons à griffes (21, 26) partant du bord supérieur vers le bord inférieur (5, 6) et ces liaisons à griffes sont prévues dans la zone médiane longitudinale de la housse (4).

5. Housse de protection selon l'une quelconque des revendications 1 à 4,
**caractérisée en ce que**
la longueur des différents segments de la tige (12) divisée longitudinalement correspond aux longueurs respectives des segments séparés par les liaisons à griffes (21, 26) formant la housse.

6. Housse de protection selon la revendication 1,
**caractérisée par**
des rubans (22, 23) qui se fixent sur au moins un support de pinces (13, 14) et dont au moins certains sont reliés d'un côté aux bords latéraux (27) de la housse (4).

7. Housse de protection selon l'une quelconque des revendications 1 à 6,
**caractérisée en ce que**
le rail ou la tige (12) est divisé longitudinalement.
